# EUROPEAN PATENT SPECIFICATION

(11) **EP 4 483 719 B1**
(45) Date of publication and mention of the grant of the patent: **16.09.2026**
(21) Application number: 24183081.9
(22) Date of filing: 19.06.2024
(51) Int. Cl.: A21C 1/02, A21C 1/14, B01F 27/232, B01F 27/95

(54) **DOUBLE-HOOK DOUGH KNEADING STRUCTURE AND DOUGH MIXER**
TEIGKNETSTRUKTUR MIT DOPPELHAKEN UND TEIGMISCHER
STRUCTURE DE PÉTRISSAGE DE PÂTE À DOUBLE CROCHET ET MÉLANGEUR DE PÂTE

(30) Priority: 20.06.2023 CN 202321575180 U
(43) Date of publication of application: 01.01.2025
(73) Proprietor: Sanlida Electrical Technology Co., Ltd, Shenzhen 518000 (CN)
(72) Inventor: LI, Chuang, Shenzhen, 518000 (CN)
(74) Representative: Patentanwälte Gierlich & Pischitzis Partnerschaft mbB

(56) References cited:
- CN-A- 102 973 171
- CN-A- 110 056 612
- CN-U- 209 420 761
- US-A- 4 337 000
- US-A1- 2015 230 480

## Description

### FIELD OF TECHNOLOGY

The present invention relates to the technical field of dough mixers, in particular to a double-hook dough kneading structure and a dough mixer.

### BACKGROUND

Household food processing tools include an automatic dough kneading machine, which contain flour and water in a mixing pot. A dough kneading hook is arranged in the mixing pot, the dough kneading hook is driven by a driving device to rotate in the mixing pot so as to mix the water and the flour and perform the dough kneading action, and the manual dough kneading operation is replaced, so that the machine is time-saving, labor-saving, convenient and sanitary. However, in the kneading process of the flour, an existing dough mixer uses a single dough kneading hook to complete the dough kneading work. In the use process, dough usually moves with the dough kneading hook, so that the dough kneading efficiency is low, and the effect is not ideal enough. In addition, under the action of an unbalanced force of the single dough kneading hook, the entire mixer has the great vibration and shaking amplitude.

The US invention patent with the publication number US4337000A discloses a double-hook dough kneading structure according to the preamble of claim 1. It discloses a planetary-type kitchen mixer-kneader having two spindles both of which turn in the same direction and travel in identical circular orbits as they sweep in an orbital path along the inside wall surfaces of the mixing bowl. The spindles are adapted to carry wire whips, flat beaters, and dough hooks, the latter in pairs which cooperate by means of their shapes and deflector blades, to simultaneously mix and work the dough and retain it low in the bowl.

The Chinese invention patent with the publication number CN102973171A discloses a dough kneading hook structure, including a first dough kneading hook, where a top of the first dough kneading hook is mounted on a first drive structure; and further including a second dough kneading hook, where a top of the second dough kneading hook is connected to a second drive structure; the first drive structure and the second drive structure are respectively a first planetary gear and a second planetary gear; the first planetary gear and the second planetary gear are connected to a sun gear; a rotating spindle is fixed in the sun gear; and each of the first planetary gear and the second planetary gear includes a gear portion and a gear shaft arranged below the gear portion.

An existing double-hook structure basically uses a sun gear to drive two planetary gears to rotate, thereby driving two dough kneading hooks to rotate. However, according to the structure, when the autorotation speeds of the dough kneading hooks need to be changed, the tooth numbers of the two planetary gears need to be adjusted, the tooth number of the sun gear also needs to be adjusted. Therefore, it is difficult to change the autorotation speeds of the dough kneading hooks, and the problems such as gear faults appear easily due to excessive gear components.

### SUMMARY

In order to overcome the defects and shortcomings in the prior art, the present invention aims to provide a double-hook dough kneading structure and a dough mixer.

The purpose of the present invention is achieved by means of a double-hook dough kneading structure according to claim 1.

Preferably, the first dough kneading hook comprises a first connection portion detachably connected to the bottom of the first rotating shaft and a first mixing portion fixed to a bottom of the first connection portion, and the first mixing portion is of a single-spiral structure.

Preferably, the second dough kneading hook comprises a second connection portion detachably connected to the bottom of the second rotating shaft and a second mixing portion fixed to a bottom of the second connection portion, and the second mixing portion is of a single-spiral structure.

Preferably, bearings are embedded in tops and bottoms of the first rotating base and the second rotating base, a middle portion of the first rotating shaft is sleeved with the two bearings of the first rotating base, and a middle portion of the second rotating shaft is sleeved with the two bearings of the second rotating base.

Preferably, a shaft sleeve is embedded in the middle of the rotating rod, a third accommodating groove is formed in a position of the protective cover corresponding to the shaft sleeve, a bottom of the shaft sleeve is embedded in the third accommodating groove, a mounting hole is formed in a bottom of the third accommodating groove, and the bottom of the output shaft sequentially passes downwards through the shaft sleeve and the mounting hole and is fixed by means of a nut.

The dough mixer comprises the double-hook dough kneading structure.

The present invention has the beneficial effects as follows: according to the double-hook dough kneading structure in the present invention, the output shaft is used to directly drive the rotating rod to rotate, so that a sun gear at the center is omitted, and the accessory cost is reduced. In addition, the autorotation speeds of the two dough kneading hooks can be changed by adjusting the tooth numbers of the two planetary gears, the mixing effect is better, the structure is simple, and the double-hook dough kneading structure is convenient to use.

The dough mixer in the present invention has the good mixing effect by using the double-hook dough kneading structure.

### BRIEF DESCRIPTION OF THE DRAWINGS

FIG. 1 is a three-dimensional view of the present invention.
FIG. 2 is a three-dimensional exploded view of the present invention.

Reference numerals: output shaft 1, rotating rod 2, first rotating base 21, second rotating base 22, shaft sleeve 23, first rotating shaft 3, second rotating shaft 4, first dough kneading hook 5, first connection portion 51, first mixing portion 52, second dough kneading hook 6, second connection portion 61, second mixing portion 62, internally-toothed ring 7, first planetary gear 81, second planetary gear 82, protective cover 9, first accommodating groove 91, second accommodating groove 92, and third accommodating groove 93.

### DESCRIPTION OF THE EMBODIMENTS

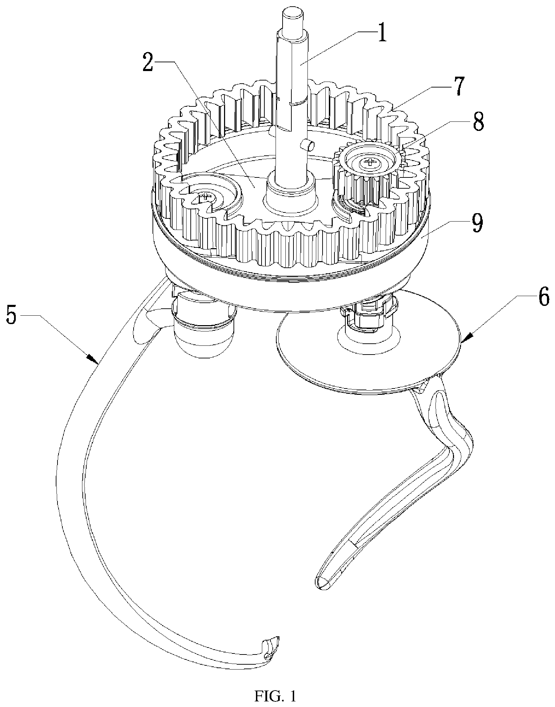

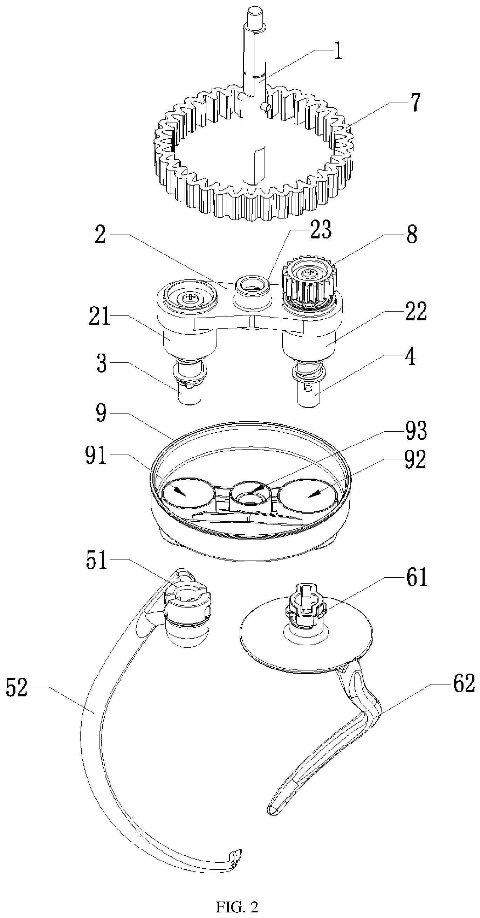

In order to facilitate understanding of a person skilled in the art, the present invention is further explained below in conjunction with embodiments and FIGS. 1-2, and the content mentioned in implementation manners is not limitations on the present invention.

As shown in FIGS. 1-2, a double-hook dough kneading structure includes an output shaft 1, a rotating rod 2 with a center perpendicularly fixed to a bottom of the output shaft 1, a first rotating shaft 3 rotationally connected to one end of the rotating rod 2, a second rotating shaft 4 rotationally connected to the other end of the rotating rod 2, a first dough kneading hook 5 detachably connected to a bottom of the first rotating shaft 3, a second dough kneading hook 6 detachably connected to a bottom of the second rotating shaft 4, an internally-toothed ring 7 positioned at an outer side of the output shaft 1, a first planetary gear 81 fixed to a top of the first rotating shaft, and a second planetary gear 82 fixed to a top of the second rotating shaft 4, where the first planetary gear 81 and the second planetary gear 82 are respectively engaged with an inner side of the internally-toothed ring 7.

According to the double-hook dough kneading structure in the present invention, the output shaft 1 is used to directly drive the rotating rod 2 to rotate, so that a sun gear at the center is omitted, and the accessory cost is reduced. In addition, the autorotation speeds of the two dough kneading hooks can be changed by adjusting the tooth numbers of the two planetary gears, the mixing effect is better, the structure is simple, and the double-hook dough kneading structure is convenient to use.

In this embodiment, the first dough kneading hook 5 includes a first connection portion 51 detachably connected to the bottom of the first rotating shaft 3 and a first mixing portion 52 fixed to a bottom of the first connection portion 51, and the first mixing portion 52 is of a single-spiral structure. The second dough kneading hook 6 includes a second connection portion 61 detachably connected to the bottom of the second rotating shaft 4 and a second mixing portion 62 fixed to a bottom of the second connection portion 61, and the second mixing portion 62 is of a single-spiral structure. The size of the first dough kneading hook 5 is greater than the size of the second dough kneading hook 6. The above structures are suitable for kneading dough, that is, mixing and kneading flour, and the arrangement of the single-spiral structures eliminates the common defects of long mixing time, residual flour after mixing and low mixing gluten production of existing mixing hooks.

In this embodiment, a first rotating base 21 is fixed to a bottom of one end of the rotating rod 2, a second rotating base 22 is fixed to a bottom of the other end of the rotating rod 2, the first rotating shaft 3 is rotationally connected into the first rotating base 21, and the second rotating shaft 4 is rotationally connected into the second rotating base 22. The arrangement of the above structures facilitates mounting of the first rotating shaft 3 and the second rotating shaft 4.

In this embodiment, bearings (not shown) are embedded in tops and bottoms of the first rotating base 21 and the second rotating base 22, a middle portion of the first rotating shaft 3 is sleeved with the two bearings of the first rotating base 21, and a middle portion of the second rotating shaft 4 is sleeved with the two bearings of the second rotating base 22. The arrangement of the above structures facilitates rotation of the first rotating shaft 3 and the second rotating shaft 4.

In this embodiment, a protective cover 9 is fixed to the bottom of the output shaft 1, a first accommodating groove 91 and a second accommodating groove 92 are respectively formed in positions of the protective cover 9 corresponding to the first rotating base 21 and the second rotating base 22, the first rotating base 21 and the second rotating base 22 are respectively embedded in the first accommodating groove 91 and the second accommodating groove 92, through holes are formed in bottoms of the first accommodating groove 91 and the second accommodating groove 92, and the bottoms of the first rotating shaft 3 and the second rotating shaft 4 respectively pass through the corresponding through holes and extend out. The arrangement of the above structures is used to protect gear structures and can also prevent impurities from falling into a mixing pot.

In this embodiment, a shaft sleeve 23 is embedded in the middle of the rotating rod 2, a third accommodating groove 93 is formed in a position of the protective cover 9 corresponding to the shaft sleeve 23, a bottom of the shaft sleeve 23 is embedded in the third accommodating groove 93, a mounting hole is formed in a bottom of the third accommodating groove 93, and the bottom of the output shaft 1 sequentially passes downwards through the shaft sleeve 23 and the mounting hole and is fixed by means of a nut. The arrangement of the above structures facilitates mounting and dismounting of the rotating rod 2 and the protective cover 9. Specifically, edge grooves are formed in two sides of the bottom of the output shaft 1, clamping blocks are fixed to positions of two sides in the shaft sleeve 23 corresponding to the two edge grooves, and the edges grooves on two sides of the bottom of the output shaft 1 are clamped between the two clamping blocks in the shaft sleeve 23, thereby preventing the rotating rod 2 from loosening during mixing. The structures are common general knowledge in the art, and are not detailed here.

The dough mixer includes the double-hook dough kneading structure. The dough mixer in the present invention has the good mixing effect by using the double-hook dough kneading structure.

The above embodiment is a preferred implementation solution of the present invention.

## Claims

1. A double-hook dough kneading structure, comprising an output shaft (1), a rotating rod (2) with a center perpendicularly fixed to a bottom of the output shaft (1), a first rotating shaft (3) rotationally connected to one end of the rotating rod (2), a second rotating shaft (4) rotationally connected to the other end of the rotating rod (2), a first dough kneading hook (5) detachably connected to a bottom of the first rotating shaft (3), a second dough kneading hook (6) detachably connected to a bottom of the second rotating shaft (4), an internally-toothed ring (7) positioned at an outer side of the output shaft (1), a first planetary gear (81) fixed to a top of the first rotating shaft (3), and a second planetary gear (82) fixed to a top of the second rotating shaft (4), wherein the first planetary gear (81) and the second planetary gear (82) are respectively engaged with an inner side of the internally-toothed ring (7); and the size of the first dough kneading hook (5) is greater than the size of the second dough kneading hook (6);
a first rotating base (21) is fixed to a bottom of one end of the rotating rod (2), a second rotating base (22) is fixed to a bottom of the other end of the rotating rod (2), the first rotating shaft (3) is rotationally connected into the first rotating base (21), and the second rotating shaft (4) is rotationally connected into the second rotating base (22);
**characterized in that**
a protective cover (9) is fixed to the bottom of the output shaft (1), a first accommodating groove (91) and a second accommodating groove (92) are respectively formed in positions of the protective cover (9) corresponding to the first rotating base (21) and the second rotating base (22), the first rotating base (21) and the second rotating base (22) are respectively embedded in the first accommodating groove (91) and the second accommodating groove (92), through holes are formed in bottoms of the first accommodating groove (91) and the second accommodating groove (92), and the bottoms of the first rotating shaft (3) and the second rotating shaft (4) respectively pass through the corresponding through holes and extend out.

2. The double-hook dough kneading structure according to claim 1, **characterized in that** the first dough kneading hook (5) comprises a first connection portion (51) detachably connected to the bottom of the first rotating shaft (3) and a first mixing portion (52) fixed to a bottom of the first connection portion (51), and the first mixing portion (52) is of a single-spiral structure.

3. The double-hook dough kneading structure according to claim 1, **characterized in that** the second dough kneading hook (6) comprises a second connection portion (61) detachably connected to the bottom of the second rotating shaft (4) and a second mixing portion (62) fixed to a bottom of the second connection portion (61), and the second mixing portion (62) is of a single-spiral structure.

4. The double-hook dough kneading structure according to claim 1, **characterized in that** bearings are embedded in tops and bottoms of the first rotating base (21) and the second rotating base (22), a middle portion of the first rotating shaft (3) is sleeved with the two bearings of the first rotating base (21), and a middle portion of the second rotating shaft (4) is sleeved with the two bearings of the second rotating base (22).

5. The double-hook dough kneading structure according to claim 1, **characterized in that** a shaft sleeve (23) is embedded in the middle of the rotating rod (2), a third accommodating groove (93) is formed in a position of the protective cover (9) corresponding to the shaft sleeve (23), a bottom of the shaft sleeve (23) is embedded in the third accommodating groove (93), a mounting hole is formed in a bottom of the third accommodating groove (93), and the bottom of the output shaft (1) sequentially passes downwards through the shaft sleeve (23) and the mounting hole and is fixed by means of a nut.

6. A dough mixer, **characterized by** comprising the double-hook dough kneading structure according to any one of claims 1 to 5.

## Patentansprüche

1. Teigknetstruktur mit zwei Haken, umfassend eine Abtriebswelle (1), eine Drehstange (2), deren Mitte senkrecht an einem Boden der Abtriebswelle (1) befestigt ist, eine erste Drehwelle (3), die rotational mit einem Ende der Drehstange (2) verbunden ist, eine zweite Drehwelle (4), die rotational mit dem anderen Ende der Drehstange (2) verbunden ist, einen ersten Teigknethaken (5), der lösbar mit einem Boden der ersten Drehwelle (3) verbunden ist, einen zweiten Teigknethaken (6), der lösbar mit einem Boden der zweiten Drehwelle (4) verbunden ist, einen Innenzahnring (7), der an einer Außenseite der Abtriebswelle (1) angeordnet ist, ein erstes Planetengetriebe (81), das an einem Oberteil der ersten Drehwelle (3) befestigt ist, und ein zweites Planetengetriebe (82), das an einem Oberteil der zweiten Drehwelle (4) befestigt ist, wobei das erste Planetengetriebe (81) und das zweite Planetengetriebe (82) jeweils mit einer Innenseite des Innenzahnrings (7) in Eingriff stehen, wobei die Abmessung des ersten Teigknethakens (5) größer als die Abmessung des zweiten Teigknethakens (6) ist,
wobei eine erste Drehbasis (21) an einem Boden eines Endes der Drehstange (2) befestigt ist, während eine zweite Drehbasis (22) an einem Boden des anderen Endes der Drehstange (2) befestigt ist, wobei die erste Drehwelle (3) rotational mit der ersten Drehbasis (21) verbunden ist, während die zweite Drehwelle (4) rotational mit der zweiten Drehbasis (22) verbunden ist; **dadurch gekennzeichnet, dass**
eine Schutzabdeckung (9) an dem Boden der Abtriebswelle (1) befestigt ist, wobei eine erste Aufnahmenut (91) und eine zweite Aufnahmenut (92) jeweils an den der ersten Drehbasis (21) bzw. der zweiten Drehbasis (22) entsprechenden Stellen der Schutzabdeckung (9) ausgebildet sind, wobei die erste Drehbasis (21) und die zweite Drehbasis (22) jeweils in der ersten Aufnahmenut (91) und der zweiten Aufnahmenut (92) eingebettet sind, wobei Durchgangslöcher in den Böden der ersten Aufnahmenut (91) und der zweiten Aufnahmenut (92) ausgebildet sind und die Böden der ersten Drehwelle (3) und der zweiten Drehwelle (4) jeweils durch die entsprechenden Durchgangslöcher geführt werden und nach außen ragen.

2. Teigknetstruktur mit zwei Haken nach Anspruch 1, **dadurch gekennzeichnet, dass** der erste Teigknethaken (5) einen ersten Verbindungsabschnitt (51), der lösbar mit dem Boden der ersten Drehwelle (3) verbunden ist, und einen ersten Mischabschnitt (52) umfasst, der an einem Boden des ersten Verbindungsabschnitts (51) befestigt ist, wobei der erste Mischabschnitt (52) eine Einzelspiralenstruktur aufweist.

3. Teigknetstruktur mit zwei Haken nach Anspruch 1, **dadurch gekennzeichnet, dass** der zweite Teigknethaken (6) einen zweiten Verbindungsabschnitt (61), der lösbar mit dem Boden der zweiten Drehwelle (4) verbunden ist, und einen zweiten Mischabschnitt (62) umfasst, der an einem Boden des zweiten Verbindungsabschnitts (61) befestigt ist, wobei der zweite Mischabschnitt (62) eine Einzelspiralenstruktur aufweist.

4. Teigknetstruktur mit zwei Haken nach Anspruch 1, **dadurch gekennzeichnet, dass** Lager in den Oberteilen und den Böden der ersten Drehbasis (21) und der zweiten Drehbasis (22) eingebettet sind, wobei ein mittlerer Abschnitt der ersten Drehwelle (3) von den beiden Lagern der ersten Drehbasis (21) ummantelt ist, während ein mittlerer Abschnitt der zweiten Drehwelle (4) von den beiden Lagern der zweiten Drehbasis (22) ummantelt ist.

5. Teigknetstruktur mit zwei Haken nach Anspruch 1, **dadurch gekennzeichnet, dass** eine Wellenhülse (23) in der Mitte der Drehstange (2) eingebettet ist, wobei eine dritte Aufnahmenut (93) an einer der Wellenhülse (23) entsprechenden Stelle der Schutzabdeckung (9) ausgebildet ist, wobei ein Boden der Wellenhülse (23) in der dritten Aufnahmenut (93) eingebettet ist, wobei in einem Boden der dritten Aufnahmenut (93) eine Montagebohrung ausgebildet ist, wobei der Boden der Abtriebswelle (1) nacheinander nach unten durch die Wellenhülse (23) und die Montagebohrung geführt und mittels einer Mutter befestigt wird.

6. Teigmischer, **dadurch gekennzeichnet, dass** er die Teigknetstruktur mit zwei Haken nach einem der Ansprüche 1 bis 5 umfasst.

## Revendications

1. Structure de pétrissage de pâte à double crochet, comprenant un arbre de sortie (1), une tige rotative (2) avec un centre fixé perpendiculairement à une partie inférieure de l'arbre de sortie (1), un premier arbre rotatif (3) relié de manière rotative à une extrémité de la tige rotative (2), un second arbre rotatif (4) relié de manière rotative à l'autre extrémité de la tige rotative (2), un premier crochet de pétrissage de pâte (5) relié de manière amovible à une partie inférieure du premier arbre rotatif (3), un second crochet de pétrissage de pâte (6) relié de manière amovible à une partie inférieure du second arbre rotatif (4), une bague à denture interne (7) positionnée au niveau d'un côté externe de l'arbre de sortie (1), un premier engrenage planétaire (81) fixé à une partie supérieure du premier arbre rotatif (3), et un second engrenage planétaire (82) fixé à une partie supérieure du second arbre rotatif (4), dans laquelle le premier engrenage planétaire (81) et le second engrenage planétaire (82) viennent respectivement en prise avec un côté interne de la bague à denture interne (7) ; et la taille du premier crochet de pétrissage de pâte (5) est supérieure à la taille du second crochet de pétrissage de pâte (6) ;
une première base rotative (21) est fixée à une partie inférieure d'une extrémité de la tige rotative (2), une seconde base rotative (22) est fixée à une partie inférieure de l'autre extrémité de la tige rotative (2), le premier arbre rotatif (3) est relié de manière rotative à la première base rotative (21), et le second arbre rotatif (4) est relié de manière rotative à la seconde base rotative (22) ; **caractérisée en ce que**
un capot de protection (9) est fixé à la partie inférieure de l'arbre de sortie (1), une première rainure de logement (91) et une deuxième rainure de logement (92) sont respectivement formées dans des positions du capot de protection (9) correspondant à la première base rotative (21) et à la seconde base rotative (22), la première base rotative (21) et la seconde base rotative (22) sont respectivement intégrées dans la première rainure de logement (91) et la deuxième rainure de logement (92), des trous traversants sont formés dans des parties inférieures de la première rainure de logement (91) et de la deuxième rainure de logement (92), et les parties inférieures du premier arbre rotatif (3) et du second arbre rotatif (4) passent respectivement à travers les trous traversants correspondants et s'étendent vers l'extérieur.

2. Structure de pétrissage de pâte à double crochet selon la revendication 1, **caractérisée en ce que** le premier crochet de pétrissage de pâte (5) comprend une première partie de liaison (51) reliée de manière amovible à la partie inférieure du premier arbre rotatif (3) et une première partie de mélange (52) fixée à une partie inférieure de la première partie de liaison (51), et la première partie de mélange (52) présente une structure à spirale simple.

3. Structure de pétrissage de pâte à double crochet selon la revendication 1, **caractérisée en ce que** le second crochet de pétrissage de pâte (6) comprend une seconde partie de liaison (61) reliée de manière amovible à la partie inférieure du second arbre rotatif (4) et une seconde partie de mélange (62) fixée à une partie inférieure de la seconde partie de liaison (61), et la seconde partie de mélange (62) présente une structure à spirale simple.

4. Structure de pétrissage de pâte à double crochet selon la revendication 1, **caractérisée en ce que** des roulements sont intégrés dans des parties supérieures et inférieures de la première base rotative (21) et de la seconde base rotative (22), une partie centrale du premier arbre rotatif (3) est manchonnée dans les deux roulements de la première base rotative (21), et une partie centrale du second arbre rotatif (4) est manchonnée dans les deux roulements de la seconde base rotative (22).

5. Structure de pétrissage de pâte à double crochet selon la revendication 1, **caractérisée en ce qu'**un manchon d'arbre (23) est intégré au milieu de la tige rotative (2), une troisième rainure de logement (93) est formée dans une position du capot de protection (9) correspondant au manchon d'arbre (23), une partie inférieure du manchon d'arbre (23) est intégrée dans la troisième rainure de logement (93), un trou de montage est formé dans une partie inférieure de la troisième rainure de logement (93), et la partie inférieure de l'arbre de sortie (1) passe successivement vers le bas à travers le manchon d'arbre (23) et le trou de montage, puis est fixée au moyen d'un écrou.

6. Mélangeur de pâte, **caractérisé en ce qu'**il comprend la structure de pétrissage de pâte à double crochet selon l'une quelconque des revendications 1 à 5.
